# EUROPÄISCHE PATENTSCHRIFT

(11) **EP 1 381 786 B1**
(45) Veröffentlichungstag und Bekanntmachung des Hinweises auf die Patenterteilung: **01.02.2006**
(21) Anmeldenummer: 02737813.2
(22) Anmeldetag: 23.04.2002
(51) Int. Cl.: F16C 11/06

(54) **WINKELGELENK**
ANGLE JOINT
JOINT A ANGLES

(30) Priorität: 23.04.2001 DE 20107002 U
(43) Veröffentlichungstag der Anmeldung: 21.01.2004
(73) Patentinhaber: igus GmbH, 51147 Köln (DE)
(72) Erfinder: RAAK, Martin, 50674 Köln (DE); BAUS, Gerhard, 53578 Windhagen (DE); BLASE, Frank, 51429 Bergisch Gladbach (DE)
(74) Vertreter: Gudat, Axel
(86) Internationale Anmeldenummer: PCT/DE2002/001485
(87) Internationale Veröffentlichungsnummer: WO 2002/086339

(56) Entgegenhaltungen:
- DE-U- 20 107 002
- DE-U- 29 804 345
- FR-A- 1 296 963
- GB-A- 2 160 582
- US-A- 3 656 821
- US-A- 6 164 829

## Beschreibung

Die Erfindung-betrifft ein Winkel gelenk zur gelenkigen verbindung zweier Bauteile mit einer Gelenkkugel nach dem Oberbegriff von Anspruch 1.

Ein solches Winkelgelenk ist aus der DE 298 04 345 U bekannt.

Das erste und zweite Befestigungsmittel gattungsgemäßer Winkelgelenke ist zumeist als zapfenartiger Vorsprung ausgebildet, der als Gewindezapfen oder als Nietzapfen ausgeführt sein kann, ohne hierauf beschränkt zu sein.

Bei gattungsgemäßen Winkelgelenken, die z. B. in der DIN 71802 beschrieben sind, wird die Gelenkkugel mittels eines separaten Federringes in der Kugelpfanne gehaltert, wozu der Federring in eine umlaufende Nut der Kugelpfanne einzulegen ist. Die Handhabung des Federringes ist jedoch vergleichsweise umständlich, da dieser zu montieren ist, wenn die Gelenkkugel mit an dieser angeordnetem Befestigungselement bereits von der Kugelpfanne aufgenommen ist, so dass für die Montage des Federringes nur wenig Raum zur Verfügung steht.

Die US 6,164,829 beschreibt ein Winkelgelenk mit einem Auskleidungsteil, welches oberhalb der äquatorialen Ebene der Gelenkkugel eine Ringnut zur Befestigung des Auskleidungsteils an einem korrespondierendem Vorsprung des Gehäuses aufweist, wobei das Auskleidungsteil ein gesehlossene Umfangsfläche mit elastisch deformierbaren Segmanten aufweist.

Der Erfindung liegt die Aufgabe zugrunde, ein verbessertes Winkelgelenk zu schaffen, bei welchem die Gelenkkugel einfach und sicher in der Gelenkpfanne montierbar ist, welches für hohe Zugkräfte auf die Gelenkkugel ausgelegt und bei welchem die Gelenkkugel manuell demontierbar ist.

Diese Aufgabe wird durch ein Winkelgelenk mit den Merkmalen des Anspruchs 1 gelöst.

Durch die an dem Auskleidungsteil einstückig angeformten Rastmittel sind weitere Befestigungsmittel wie Federringe, Sicherungsbügel oder dergleichen entbehrlich, wodurch die Montage des Winkelgelenks wesentlich vereinfacht ist. Des weiteren kann durch das separate Auskleidungsteil die Gelenkkugel mit geringem Kraftaufwand ohne Gefahr von Beschädigungen an diesem befestigt werden. Zudem kann die Gleitfläche für die Gelenkkugel den jeweiligen Anforderungen besonders angepasst werden, wobei das Auskleidungsteil aus einem Kunststoffmaterial bestehen kann. Insbesondere kann das Auskleidungsteil aus einem abriebfesten, druckfesten, selbstschmierenden Material bestehen, so dass das winkelgelenk besonders langlebig und wartungsfrei ist und die Materialpaarung aus Gelenkkugel und Auskleidungsteil einen geringen Reibwert aufweist.

Zur Montage des Winkolgelenkes kann die Gelenkkugel zunächst in das Auskleidungsteil eingerastet werden, wonach anschließend das Auskleidungsteil in die Kugelpfanne eingerastet wird.

Vorzugsweise sind die Rastmittel derart ausgeführt, dass diese bezüglich in Richtung der Vorzugsachse des ersten Befestigungsmittels zur Festlegung des ersten Bauteils an der Gelenkkugel, dass z. B. als zapfenartiger Vorsprung ausgeführt ist, selbstsperrend wirkt. Unter einer Selbstsperrung sei verstanden, dass die Gelenkkugel praktisch nur unter Zerstörung des Auskleidungsteils und/oder der Kugelpfanne von dieser entfernbar ist.

Das Auskleidungsteil ist vorzugsweise als kappenartiges Bauteil ausgeführt, das die Gelenkkugel zumindest nahezu vollständig aufnimmt und das mit seiner Außenseite vollflächig an der Innenwandung der Kugelpfanne anliegt. Ein das Befestigungsmittel umgebender Bereich der Gelenkkugel kann sich auch außerhalb des Auskleidungsteils erstrecken. Zumindest ist die Gelenkkugel um etwas mehr als eine Kugelhälfte von dem Auskleidungsteils aufgenommen, so dass die Gelenkkugel eine Hinterschneidung des Auskleidungsteils hintergreift. Gegebenenfalls kann das Auskleidungsteil nur mit einem Teilbereich seiner Außenseite an der Innenseite der Kugelpfanne anliegen.

Es kann die gesamte oder nahezu gesamte Innenfläche des Auskleidungsteils als Gleitfläche ausgeführt sein, die mit der korrespondierenden Gleitfläche der Gelenkkugel bei einer Bewegung derselben zur Anlage kommen kann. Die Innenwandung des Auskleidungsteils karin auch mehrere voneinander getrennte Gleitflächen aufweisen.

Das Auskleidungsteil weist einen umlaufenden Rand auf, der den Aufnahmeraum für die Gelenkkugel zur Aufnahmeöffnung hin, durch welche die Gelenkkugel in das Auskleidungsteil eingeführt wird, begrenzt, wobei der umlaufende Rand mindestens einen Schlitz aufweist, der sich von dem der Aufnahmeöffnung zugewandten freien stirnseitiger Rand über einen Teil der Höhe des Auskleidungsteils erstreckt. Durch die Einbringung des Schlitzes wird die elastische Deformierbarkeit des Auskleidungsteils erhöht, so dass das Auskleidungsteil leichter auf die Gelenkkugel aufgeschnappt werden kann. Vorzugsweise ist eine Vielzahl von Schlitzen über den Umfang des Randes verteilt vorgesehen, so dass zwischen benachbarten Schlitzen elastisch deformierbare Federzungen ausgebildet werden, die als Rastmittel zur Festlegung der Gelenkkugel dienen. Das Auskleidungsteil kann mit zwei oder mehr Schlitzen versehen sein, die gleichmäßig über den Umfang des Auskleidungsteils verteilt sein können.

Vorzugsweise erstreckt sich einer der Schlitze, besonders bevorzugt sämtliche der Schlitze, in der Höhe von dem stirnseitiger Rand des Auskleidungsteils bis zum Mittelpunkt der in dem Aufnahmeteil angeordneten Gelenkkugel oder bis über den Mittelpunkt der Gelenkkugel hinaus bzw. bis zum oder über das Zentrum des Gelenkkugelaufnahmeraumes. Hierdurch wird die Montage der Gelenkkugel erleichtert. Des weiteren können die sich seitlich an die Schlitze angrenzenden Bereiche des Auskleidungsteils bei der Befestigung des Auskleidungsteils in der Kugelpfanne elastisch deformiert werden, so dass das Auskleidungsteil leichter rastend an der Kugelpfanne festlegbar ist. Hierzu können die seitlich an die Schlitze angrenzenden Bereiche des Auskleidungsteils, die als Federzungen ausgebildet sein können, beispielsweise radial einwärts gerichtet deformiert werden, wodurch korrespondierende Rastmittel an dem Auskleidungsteil und der Kugelpfanne miteinander zum Eingriff gebracht werden können.

An der der Gelenkkugel zugewandten Innenwand des Auskleidungsteils kann ein nach Innen vorstehender, sich zumindest über einen Teilumfang der Gelenkkugel erstreckender Vorsprung vorgesehen sein, der ohne Spiel an der Gelenkkugel auf der der Aufnahmeöffnung für die Gelenkkugel zugewandten Kugelhälfte anliegt. Vorzugsweise liegt der Vorsprung linienförmig an der Gelenkkugel an. Es können mehrere an der Gelenkkugel anliegende Vorsprünge vorgesehen sein, deren Anlageflächen an der Gelenkkugel sich insgesamt über einen Kreisumfang erstrecken, der lediglich durch in dem Auskleidungsteil eingebrachte Schlitze unterbrochen wird. Hierdurch kann die Gelenkkugel besonders sicher in dem Auskleidungsteil befestigt werden.

Der von der Innenwand des Auskleidungsteils nach Innen vorstehende Vorsprung kann von der freien stirnseitiger Rand des umlaufenden Randes des Auskleidungsteils, die der Aufnahmeöffnung zur Einführung der Gelenkkugel in das Auskleidungsteil zugewandt ist, beabstandet sein. Vorzugsweise erweitert sich die Aufnahmeöffnung für die Gelenkkugel ausgehend von dem von der Innenwand des Auskleidungsteils nach Innen vorstehenden Vorsprung in Richtung auf die Aufnahmeöffnung, so dass der Rand des Auskleidungsteils benachbart der Aufnahmeöffnung in Richtung auf die Gelenkkugel komprimierbar ist. Zur Erleichterung der Kompression dienen die oben beschriebenen Schlitze des Auskleidungsteils. Hierdurch wird eine rastende Verbindung von an der Außenseite des elastisch deformierbaren Auskleidungsteils angeordneten Rastmitteln mit korrespondierenden Rastmitteln, die an der im wesentlichen formstabilen Kugelpfanne vorgesehen sind, erleichtert.

Zur Rastverbindung des Auskleidungsteils mit der Kugelpfanne kann an dem Auskleidungsteil ein teilweise, vorzugsweise vollständig, umlaufender und radial vorstehender Vorsprung vorgesehen sein, der in eine korrespondierende Nut bzw. Ausnehmung der Kugelpfanne eingreift. Vorzugsweise ist der nach außen vorstehende Vorsprung an dem Auskleidungsteil benachbart oder unmittelbar benachbart zu dem stirnseitiger Rand des Auskleidungsteils angeordnet, der die Aufnahmeöffnung der Gelenkkugel begrenzt.

Unabhängig von der Ausgestaltung der Formschlussmittel zur Festlegung des Auskleidungsteils innerhalb der Kugelpfanne bzw. zur Festlegung der Gelenkkugel innerhalb des Auskleidungsteils können die jeweiligen Formschlussmittel bezogen auf die Einführrichtung der Gelenkkugel in das Auskleidungsteil bzw. zur Längsachse des Auskleidungsteils axial beabstandet―sein. Die Rastmittel zur Festlegung des Auskleidungsteils an der Kugelpfanne zu der Aufnahmeöffnung für die Gelenkkugel weisen hierbei einen geringeren axialen Abstand auf als die Rastmittel zur Festlegung der Gelenkkugel innerhalb des Auskleidungsteils.

Das Auskleidungsteil kann verdrehbar bezüglich einer Drehung um die Längsachse des Auskleidungsteils, die senkrecht auf der Aufnahmeöffnung für die Gelenkkugel steht, ausgeführt sein. Hierzu kann das Auskleidungsteil mit einer gewissen Vorspannung an der Innenseite der Kugelpfanne anliegen oder praktisch frei verdrehbar sein. Der Reibungswiderstand gegenüber einer Drehbewegung des Auskleidungsteils um seine Längsachse kann zwischen Auskleidungsteil und Kugelpfanne größer, kleiner oder im wesentlichen gleich zu dem Reibungswiderstand zwischen Gelenkkugel und Auskleidungsteil sein.

Zur Erleichterung der Demontage des Auskleidungsteils kann die Kugelpfanne mit mindestens einem Schlitz versehen sein, der sich von der die Aufnahmeöffnung für das Auskleidungsteil begrenzenden freien stirnseitiger Rand in Längsrichtung der Kugelpfanne erstreckt. Der Schlitz kann insbesondere eine geringere Längsausdehnung aufweisen als die Schlitze in dem Auskleidungsteil, die sich von der freien stirnseitiger Rand ausgehend über einen Teil der Höhe des Auskleidungsteils erstrecken. Die Rastmittel zur Festlegung des Auskleidungsteils an der Kugelpfanne sowie die Länge des in der Kugelpfanne eingebrachten Schlitzes können derart bemessen sein, dass die Gelenkkugel derart aus der Gelenkpfanne demontierbar ist, dass das an der Gelenkkugel angebrachte Befestigungsmittel in Richtung auf das an der Kugelpfanne angebrachte Befestigungsmittel verschwenkt und durch manuelle Krafteinwirkung gedrückt wird. Hierdurch kann die Gelenkkugel ohne zusätzliche Werkzeuge demontiert werden, wobei die Gelenkkugel gleichzeitig sehr hohe Zugkräfte senkrecht zur Aufnahmeöffnung des Auskleidungsteils für die Gelenkkugel aufnehmen kann.

Die Erfindung sei nachfolgend beispielhaft beschrieben und anhand der Figuren beispielhaft erläutert. Es zeigen:
- Fig. 1: eine schematische Seitenansicht des erfindungsgemäßen Winkelgelenks,
- Fig. 2: eine Ansicht des Auskleidungsteils des Winkelgelenks nach Figur 1 im Querschnitt (Figur 2a) im Teilaufriss (Figur 2b) sowie in perspektivischer Darstellung (Figur 2c).
- Fig. 3: einen Querschnitt der Kugelpfanne nach Figur 1 (Figur 3a) und eine Detailansicht (Figur 3b),
- Fig. 4: eine perspektivische Darstellung der Kugelpfanne nach Figur 1,

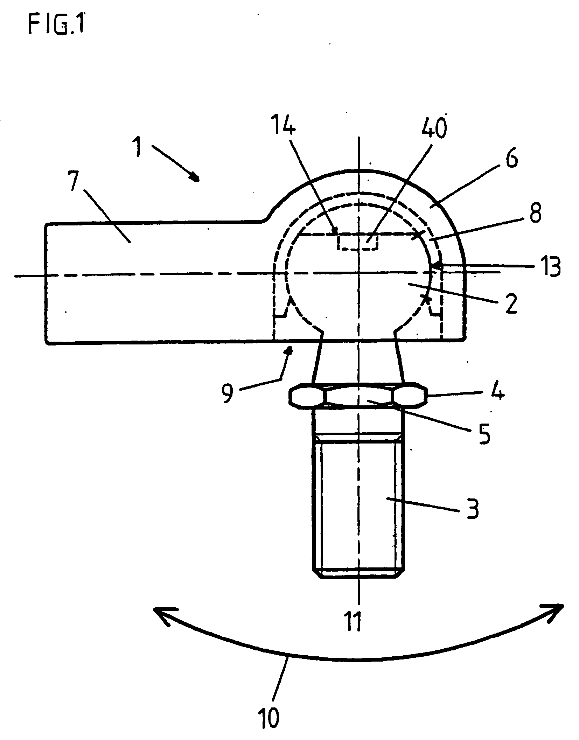

Gemäß Figur 1 weist das erfindungsgemäße Winkelgelenk 1 eine Gelenkkugel 2 und ein an dieser angeordnetes, vorzugsweise einstückig angeformtes, Befestigungsmittel 3 auf, mittels dessen die Gelenkkugel an einem ersten Bauteil befestigbar ist. Das zapfenartige Befestigungsmittel 3 ist als Gewindestift ausgeführt, der an dem radial vorspringenden Rand 4 Angriffsflächen 5 für ein Werkzeug wie einen Schraubenschlüssel zur Befestigung der Gelenkkugel an dem jeweiligen Bauteil aufweist. Die Kugelpfanne 6, die die Gelenkkugel 2 vollständig umgibt, weist ebenfalls ein einstückig angeformtes Befestigungsmittel 7 in Art eines zapfenartigen Vorsprunges mit Innengewinde auf, an dem ein zweites Bauteil befestigbar ist. Es sei darauf hingewiesen, dass die Gelenkkugel 2 auch teilweise aus der Kugelpfanne vorstehen kann.

Erfindungsgemäß ist ein Auskleidungsteil 8 vorgesehen, welches nach dem Ausführungsbeispiel vollständig innerhalb der Kugelpfanne 6 angeordnet ist und welches die Gelenkkugel 2 außenseitig umgibt, wobei die Gelenkkugel 2 teilweise aus dem Auskleidungsteil 8 in Richtung auf die Aufnahmeöffnung 9 vorsteht, durch welche das Auskleidungsteil 8 in die Gelenkpfanne 6 eingeführt werden kann.

Wie durch den Pfeil 10 angedeutet, ist das Befestigungsmittel 3 gegenüber dem Befestigungsmittel 7 verschwenkbar und des weiteren um die Längsachse 11 des Befestigungsmittels, die parallel zur Aufnahmeöffnung der Kugelpfanne 6 sowie auch der Aufnahmeöffnung 12 des Auskleidungsteils 8, durch welche die Gelenkkugel 2 in dieses eingeführt werden kann, angeordnet.

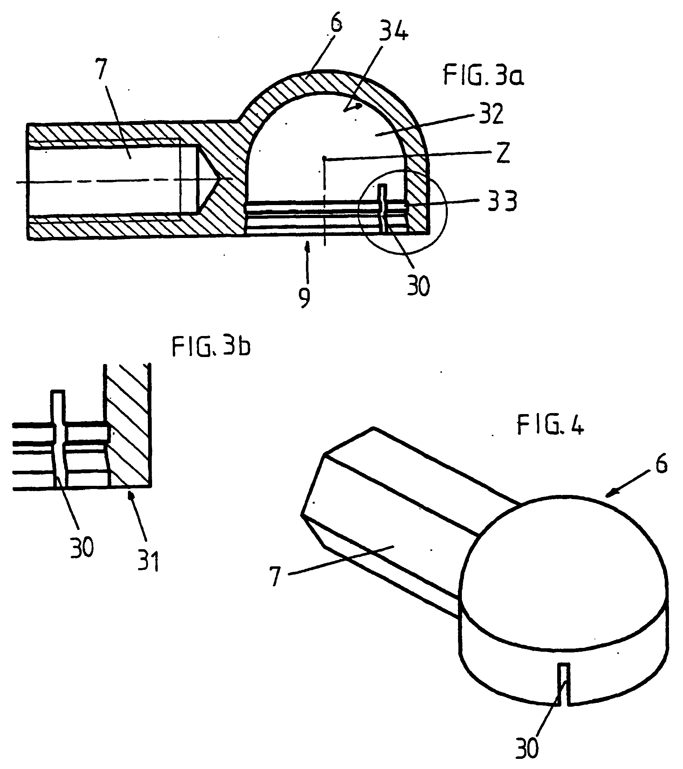

Das Auskleidungsteil 8 liegt mit seiner Außenfläche 22 vollflächig an der Innenwandung 34 (Fig. 3a) der Kugelpfanne 6 an. Des weiteren liegt die Gelenkkugel 2 mit einer Kugelkalotte 13 vollfächig an der Innenseite des Auskleidungsteils 8 an. Die Gelenkkugel 2 ist hierbei unter Ausbildung einer ebenen Fläche 14, auf welcher die Längsachse 11 des Befestigungsmittels 3 senkrecht steht, abgekappt. In der Ebene 14 kann eine Ausnehmung 40, z. B. eine Innensechskant, zur Aufnahme eines Werkzeuges eingeformt sein, mittels dessen das Befestigungsmittel in das zugeordnete Bauteil eingeschraubt werden kann.

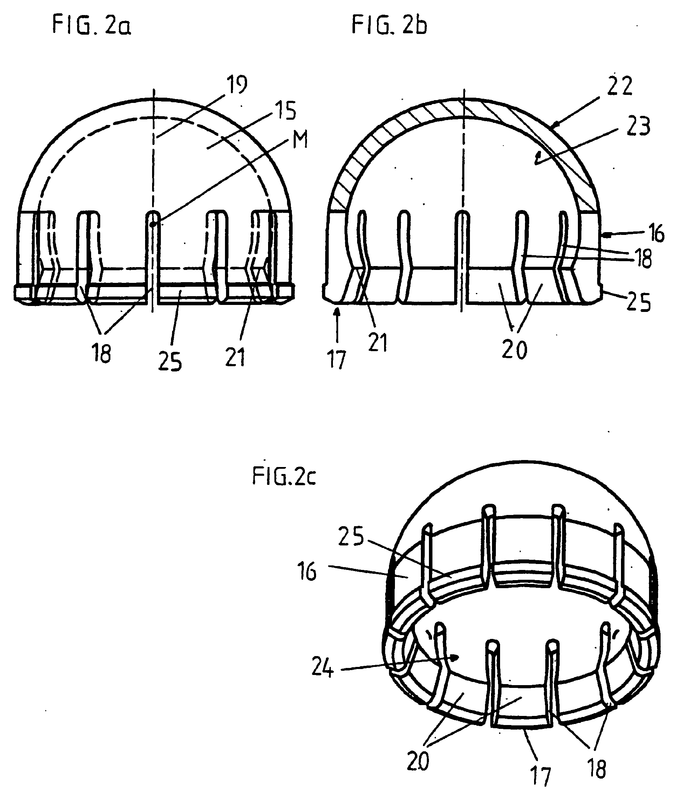

Das in Figur 2 näher dargestellte Auskleidungsteil 8 ist kappenartig ausgeführt und weist einen Aufnahmeraum 15 in form einer Kugelkalotte für die Gelenkkugel 2 auf, an dem ein in etwa zylindrischer Rand 16 mit einem stirnseitiger Rand 17 angeformt ist, wobei der stirnseitiger Rand 17 die Aufnahmeöffnung 12 außenseitig begrenzt. In dem Rand 16 sind Schlitze 18 eingeformt, die an dem stirnseitigen Rand 17 enden und sich parallel zur Längsachse 19 des Auskleidungsteils 8 über einen Teil der Höhe desselben erstrecken. Die Schlitze 18 sind gleichmäßig über den Umfang des Auskleidungsteils verteilt angeordnet, wodurch elastisch deformierbare Federzungen 20 resultieren. Die Schlitze 18 erstrecken sich ausgehend von dem stirnseitigen Rand 17 bis über den Mittelpunkt M des kalottenförmigen Aufnahmeraumes 15 bzw. den kongruent zu diesem angeordneten Mittelpunkt der in dem Aufnahmeraum 15 angeordneten Gelenkkugel 2 hinaus.

Zur formschlüssigen Festlegung der Gelenkkugel sind an den Innenseiten der Federzungen 20 sich in das Innere des Auskleidungsteils 8 erstreckende Vorsprünge 21 angeformt, die linienförmig an der Gelenkkugel 2 anliegen und insgesamt sich bis auf die Unterbrechungen durch die Schlitze 18 über einen Kreisbogen erstrecken. Die Höhe der Vorsprünge 21 nimmt in Richtung auf die Aufnahmeöffnung 12 hin ab, so dass sich der Querschnitt des Auskleidungsteils 8 von den Vorsprüngen 21 in Richtung auf die Aufnahmeöffnung 12 hin erweitert.

Zur rastenden Festlegung des Auskleidungsteils 8 ist benachbart zu der stirnseitiger Rand 17 außenseitig ein umlaufender axial vorspringender Rand 25 vorgesehen, der nur durch die Schlitze 18 unterbrochen ist und der von einer korrespondierenden Nut 33 (Fig. 3a) der Kugelpfanne 6 aufgenommen wird. Hierdurch ist das Auskleidungsteil 8 um dessen Achse 19 in der Kugelpfanne 6 verdrehbar.

Zur Montage des Winkelgelenkes wird zunächst unter Biegung der Federzungen 20 nach außen die Gelenkkugel 2 in axialer Richtung in das Auskleidungsteil 8 eingeschoben und rastend an diesem festgelegt. Anschließend wird das Auskleidungsteil 8 mit der Gelenkkugel 2 in axialer Richtung in die Kugelpfanne 6 eingeführt und ebenfalls rastend an dieser festgelegt. Hierbei wird durch den axialen Abstand der Vorsprünge 21 und des Rastrandes 25 eine Deformation der Federzungen 20 in Richtung auf die Achse 19 ermöglicht, was durch die in Richtung auf die Aufnahmeöffnung 12 abnehmende Höhe der Vorsprünge 21 gefördert wird. Wird nach Festlegung des Auskleidungsteils 8 in der Kugelpfanne 6 eine Zugkraft auf das Befestigungsmittel 3 parallel zur Achse 11 ausgeübt, so tritt eine Selbstsperrüng der Rastmittel ein, da die Gelenkkugel 2 auf den kalottenförmig ausgebildeten Rand des Vorsprunges 21 drückt und hierdurch den Rand 25 in der Aufnahmenut der Kugelpfanne 6 sicher festlegt. Eine Demontage der Gelenkkugel 2 durch ausreichend hohe Zugkräfte ist dann nur unter Zerstörung der Kugelpfanne 6 oder des Befestigungsmittels 3 möglich.

Zur zerstörungsfreien Demontage der Gelenkkugel 2 ist die Kugelpfanne 6 mit einem Schlitz 30 versehen (Figuren 3, 4), der sich von der die Aufnahmeöffnung 9 begrenzenden stirnseitigen Rand 31 der Kugelpfanne 6 über einen Teil der Höhe derselben erstreckt. Auf der gegenüberliegenden Seite der Kugelpfanne ist ein weiterer identischer Schlitz 30 eingeformt, wobei gegebenenfalls auch nur einer oder auch mehrere der Schlitze 30 vorgesehen sein können. Der Schlitz 30 erstreckt sich bis unterhalb des Zentrums Z des Aufnahmeraumes 32 der Kugelpfanne für das Auskleidungsteil 8.

Zur Demontage der Gelenkkugel 2 kann das zapfenartige Befestigungsmittel 3 manuell in Richtung auf das Befestigungsmittel 7 der Kugelpfanne 6 gedrückt werden, so dass die den Schlitzen 30 benachbarten Bereiche der Kugelpfanne 6 nach außen gedrückt und hierdurch die Gelenkkugel 2 aus dem Auskleidungsteil 8 ausgerastet wird. Das Auskleidungsteil 8 kann hierbei zusammen mit der Gelenkkugel 2 oder nachfolgend zu dieser montiert werden.

Gelenkkugel 2 und Befestigungsmittel 3, das einstückig an dieser angeformt sein kann, sowie die Gelenkpfanne 6 können aus einem Kunststoffmaterial bestehen.

### Bezugszeichenliste

- 1: Winkelgelenk
- 2: Gelenkkugel
- 3: Befestigungsmittel
- 4: Rand
- 5: Angriffsfläche
- 6: Kugelpfanne
- 7: Befestigungsmittel
- 8: Auskleidungsteil
- 9: Aufnahmeöffnung
- 10: Pfeil
- 11: Achse
- 12: Aufnahmeöffnung
- 13: Kugelkalotte
- 14: Ebene
- 15: Aufnahmeraum
- 16: Rand
- 17: stirnseitiger Rand
- 18: Schlitz
- 19: Achse
- 20: Federzunge
- 21: Vorsprung
- 22: Aussenfläche
- 23: Gleitfläche
- 24: Innenwand
- 25: Rand
- 30: Schlitz
- 31: stirnseitiger Rand
- 32: Aufnahmeraum
- 33: Nut
- 34: Innenwandung
- 40: Ausnehmung
- M: Mitte
- Z: Zentrum

## Patentansprüche

1. Winkelgelenk zur gelenkigen Verbindung zweier Bauteile mit einer Gelenkkugel (2), an der ein erstes Befestigungsmittel (3) zur Befestigung der Gelenkkugel (2) an einem ersten Bauteil vorgesehen ist, und einer Kugelpfanne (6), die die Gelenkkugel (2) zumindest teilweise umgibt und ein zweites Befestigungsmittel (7) zur Befestigung eines zweiten Bauteils aufweist, wobei das an der Gelenkkugel (2) angebrachte Befestigungsmittel (3) um eine Vorzugsachse (11) zumindest um einen Winkelbereich drehbar und gegenüber dem zweiten Befestigungsmittel (7) verschwenkbar ist, wobei ein in der Kugelpfanne (6) anordenbares Auskleidungsteil (8) vorgesehen ist, das einen Aufnahmeraum (15) für die Gelenkkugel (2) mit einem den Aufnahmeraum begrenzenden Rand aufweist, wobei das Auskleidungsteil (8) zumindest eine Gleitfläche (23) zur gleitenden Lagerung der Gelenkkugel (2) aufweist, und wobei das Auskleidungsteil (8) mit einstückig angeformten Rastmitteln (25) zur Festlegung desselben in der Kugelpfanne (6) und mit einstückig angeformten Rastmitteln (21) zur Festlegung der Gelenkkugel (2) innerhalb des Auskleidungsteils (8) versehen ist, wobei die Gelenkkugel mittels dieser Rastmittel in demontiertem Zustand des Auskleidungsteils rastend in diesem festlegbar ist, **dadurch gekennzeichnet,**
**dass** die Rastmittel (25) zur Festlegung des Auskleidungsteils (8) an der Kugelpfanne zu der Aufnahmeöffnung (9) des Gehäuses für die Gelenkkugel (2) einen geringeren axialen Abstand aufweisen als die Rastmittel zur Festlegung der Gelenkkugel (2) innerhalb des Auskleidungsteils (8), und
(1) dass der den Aufnahmeraum der Gelenkkugel (2) begrenzende umlaufende Rand (16) des Auskleidungsteils (8) eine Vielzahl von Schlitzen aufweist, die sich von dem stirnseitigen Rand (17) über einen Teil der Höhe des Auskleidungsteils erstrecken und durch die als Rastmittel wirkende Federzungen (20) ausgebildet werden, wobei die Rastmittel (25) zur Festlegung des Auskleidungsteils in der Kugelpfanne an den Außenseiten und die Rastmittel (21) zur Festlegung der Gelenkkugel an den Innenseiten dieser Federzungen angeformt sind,
und/oder
(2) dass in der Kugelpfanne (6) mindestens ein Schlitz (30) angeordnet ist, der sich von dem die Aufnahmeöffnung (9) für das Auskleidungselement (8) begrenzenden stirnseitigen Rand (31) in seiner Längsrichtung über einen Teil der Höhe der Kugelpfanne erstreckt, und dass das Gelenkelement durch manuelle Krafteinwirkung des an dem Gelenkelement (2) angeordneten Befestigungsmittels (3) in Richtung auf das an der Kugelpfanne (6) angeordnete Befestigungsmittel (7) demontierbar ist.

2. Winkelgelenk nach Anspruch 1, **dadurch gekennzeichnet, dass** das Auskleidungateil (8) als kappenartiges Bauteil ausgeführt ist, welches die Gelenkkugel (2) nahezu vollständig aufnimmt und mit seiner Außenseite (22) vollflächig an der Innenwandung (34) der Kugelpfanne anliegt.

3. winkelgelenk nach Anspruch 1 oder 2, **dadurch gekennzeichnet, dass** über den Umfang des Auskleidungsteils (8) eine Mehrzahl von Schlitzen (18) vorgesehen ist, durch die als Rastmittel wirkende Federzungen (20) ausgebildet werden.

4. winkolgelenk nach einem der Ansprüche 1 bis 3, **dadurch gekennzeichnet, dass** sich der mindestens eine Schlitz (18) in der Höhe von der Stirnseite (17) des Auskleidungsteils (8) bis zum oder über dem Mittelpunkt (M) der Gelenkkugel (2) hinaus erstreckt.

5. Winkelgelenk nach einem der Ansprüche 1 bis 4, **dadurch gekennzeichnet, dass** an der Innenwand (24) des Auskleidungsteils (8) mindestens ein nach Innen vorstehender, sich zumindest über einen Teilumfang der Gelenkkugel (2) erstreckender Vorsprung (21) vorgesehen ist, der ohne Spiel an der Gelenkkugel (2) auf der der Aufnahmeöffnung (12) des Auskleidungsteils (8) zugewandten Kugelhälfte anliegt.

6. Winkelgelenk nach Anspruch 5, **dadurch gekennzeichnet, dass** sich der Aufnahmeraum (15) der Gelenkkugel (2) von dem Vorsprung (21) in Richtung auf die Aufnahmeöffnung (12) erweitert.

7. Winkelgelenk nach einem der Ansprüche 1 bis 6, **dadurch gekennzeichnet, dass** an der Außenseite (23) des Auskleidungsteils (8) ein zumindest teilweise umlaufender, radial vorstehender Vorsprung (25) und an der Kugelpfanne (6) eine korrespondierende Nut (33) vorgesehen ist, die unter Ausbildung einer Rastverbindung zusammenwirken.

8. winkelgelenk nach einem der Ansprüche 1 bis 7, **dadurch gekennzeichnet, dass** das Auskleidungsteil (8) um seine Längsachse (19) verdrehbar in der Kugelpfanne (6) angeordnet ist.

9. Winkelgelenk nach einem der Ansprüche 1 bis 8, **dadurch gekennzeichnet, dass** an der Gelenkkugel (2) eine Ausnehmung (40) zum Eingriff eines Werkzeuges eingeformt ist.

10. Winkelgelenk nach einem der Ansprüche 1 bis 9, **dadurch gekennzeichnet, dass** das Kugelgelenk (2) und/oder das Auskleidungsteil (8) und/oder die Kugelpfanne (6) aus einem Kunststoffmaterial bestehen.

11. winkelgelenk nach einem der Ansprüche 1 bis 10, **dadurch gekennzeichnet, dass** die Formschlussmittel zur Festlegung des Auskleidungsteilsl (8) an der Kugelpfanne als Rastmittelvorsprung (25) und das Formschlussmiztel zur Festlegung der Gelenkkugel (2) innerhalb des Auskleidungsteils (8) als Vorsprung (21) ausgeführt sind, und dass der Rastmittelvorsprung (25) und der Vorsprung (21) derart angeordnet sind, dass bei Zugkraftausübung auf das Befestigungsmittel (3) parallel zu dessen Achse (11) der Vorsprung (21) den Rastmittelvorsprung (25) sicher in einer Ausnehmung der Kugelpfanne (6) festlegt.

12. winkelgelenk nach einem der Ansprüche 1 bis 11, **dadurch gekennzeichnet, dass** das Auskleidungsteil (8) vollflächig an der Innenwandung (34) der Kugelpfanne anliegt.

## Claims

1. Angle joint for the articulated connection of two components, with a joint ball (2), on which a first mounting element (3) is provided for mounting the joint ball (2) on a first component, and a ball cup (6), which at least partially surrounds the joint ball (2) and displays a second mounting element (7) for mounting a second component, where the mounting element (3) attached to the joint ball (2) can rotate through a preferred axis (11), at least about an angular range, and pivot relative to the second mounting element (7), wherein a liner (8) provided in the cup (6) is equipped with a nest (15) for the joint ball (2) and is provided with a lateral edge delimiting the nest, the liner (8) has at least one sliding surface (23) for sliding mounting of the joint ball (2), and the liner (8) is provided with integrally moulded snap elements (25) for securing the same in the cup (6), and with integrally moulded snap elements (21) for securing the joint ball (2) inside the liner (8), wherein the joint ball can be fastened in the disassembled liner by means of these snap elements, **characterized in that** the snap elements (25) for securing the liner (8) to the cup display a smaller axial distance from the nest opening (9) of the housing for the joint ball (2) than the snap elements for securing the joint ball (2) in the liner (8), and
(1) that the circumferential rim (16) of the liner (8) delimiting the nest for the joint ball (2) is provided with a plurality of slits which extends from the end rim (17) of the liner (8) over part of the height of the same and by which flexible tabs (20) acting as snap elements are formed, wherein the snap elements (25) for securing the liner in the cup are moulded at the outer sides and the snap elements (21) for securing the joint ball are moulded at the inner sides of these flexible tabs,
and/or
(2) that the cup (6) is provided with at least one slit (30) that extends in its longitudinal direction from the end rim (31) delimiting the nest opening (9) for the liner (8) over part of the height of the cup (6), and that the joint element can be disassembled by applying manual force to the mounting element (3) on the joint ball (2) in the direction of the mounting element (7) on the cup (6).

2. Angle joint as per Claim 1, **characterized in that** the liner (8) is designed as a cap-like part, which accommodates the joint ball (2) almost entirely and the outside surface (22) of which is in full contact with the inside wall (34) of the cup.

3. Angle joint as per Claim 1 or 2, **characterized in that** numerous slits (18) are provided over the circumference of the liner (8), thus forming flexible tabs (20) that act as snap elements.

4. Angle joint as per one of Claims 1 to 3, **characterized in that** the at least one slit (18) extends vertically from the end rim (17) of the liner (8) up to or beyond the centre point (M) of the joint ball (2).

5. Angle joint as per one of Claims 1 to 4, **character-ised in that** the inside wall (24) of the liner (8) is provided with at least one inwardly protruding projection (21), which extends over at least part of the circumference of the joint ball (2) and rests without play on the half of the joint ball (2) facing the nest opening (12) of the liner (8) .

6. Angle joint as per Claim 5, **characterised in** t h a t the nest (15) of the joint ball (2) expands from the projection (21) towards the nest opening (12).

7. Angle joint as per one of Claims 1 to 6, **characterised in that** the liner (8) is provided on its outside surface (23) with a radially protruding projection (25), which runs around at least part of the circumference, and the cup (6) is provided with a corresponding groove (33), the two of which interact to form a snap connection.

8. Angle joint as per one of Claims 1 to 7, **characterised in that** the liner (8) is arranged in the cup (6) to rotate about its longitudinal axis (19).

9. Angle joint as per one of Claims 1 to 8, **characterised in that** a recess (40) is integrally moulded in the joint ball (2) for insertion of a tool.

10. Angle joint as per one of Claims 1 to 9, **characterised in that** the joint ball (2) and/or the liner (8) and/or the cup (6) are made of a plastic material.

11. Angle joint as per one of Claims 1 to 10, **characterised in that** the form-fit elements for securing the liner (8) in the cup are designed as a snap projection (25), and the form-fit element for securing the joint ball (2) in the liner (8) as a projection (21), and **in that** the snap projection (25) and the projection (21) are arranged such that, when tension force is exerted on the mounting element (3) parallel to its axis (11), projection (21) firmly secures snap projection (25) in a recess in the cup (6).

12. Angle joint as per one of Claims 1 to 11, **characterised in that** the liner (8) is in full contact with the inside wall (34) of the cup.

## Revendications

1. Joint à angles destiné à relier de manière articulée deux composants avec une rotule (2) au niveau de laquelle est prévu un premier moyen de fixation (3) pour fixer la rotule (2) à un premier composant, et une calotte (6) qui entoure au moins partiellement la rotule (2) et qui présente un deuxième moyen de fixation (7) pour fixer un deuxième composant, sachant que le moyen de fixation (3) attaché à la rotule (2) peut tourner au moins d'un certain angle autour d'un axe préférentiel (11) et pivoter par rapport au deuxième moyen de fixation (7), sachant qu'il est prévu un élément de revêtement (8) qui peut être placé dans la calotte (6) et qui présente un logement (15) pour la rotule (2) avec un bord délimitant le logement (15), sachant que l'élément de revêtement (8) présente au moins une surface de glissement (23) destinée au positionnement glissant de la rotule (2) et sachant que l'élément de revêtement (8) est muni de moyens d'enclenchement (25) formés d'une seule pièce pour fixer ledit élément dans la calotte (6) et de moyens d'enclenchement (21) formés d'une seule pièce pour fixer la rotule (2) dans l'élément de revêtement (8), sachant que la rotule peut être fixée, l'élément de revêtement démonté, dans celui-ci, par enclenchement, à l'aide de ces moyens d'enclenchement, **caractérisé en ce que** les moyens d'enclenchement (25) pour fixer l'élément de revêtement (8) sont, au niveau de la calotte, par rapport à l'ouverture du logement (9) de la cage pour la rotule (2), moins espacés axialement que les moyens d'enclenchement pour fixer la rotule (2) dans l'élément de revêtement (8), et **en ce que** le bord (16), circulaire et délimitant le logement de la rotule (2), de l'élément de revêtement (8) présente une multitude d'entailles qui s'étendent du bord côté frontal (17) sur une partie de la hauteur de l'élément de revêtement et qui permettent de réaliser les languettes souples (20) agissant en tant que moyen d'enclenchement, sachant que les moyens d'enclenchement (25) pour fixer l'élément de revêtement dans la calotte sont formés au niveau des côtés extérieurs et que les moyens d'enclenchement (21) pour fixer la rotule sont formés au niveau des côtés intérieurs de ces languettes souples et/ou **en ce qu'**une entaille (30) qui s'étend du bord côté frontal (31) délimitant l'ouverture du logement (9) pour l'élément de revêtement (8) dans sa direction longitudinale sur une partie de la hauteur de la calotte, est au moins placée dans la calotte (6) et que l'élément d'articulation (2) peut être démonté par l'application mécanique d'une force du moyen de fixation (3) disposé au niveau de l'élément d'articulation (2), en direction de sur le moyen de fixation (7) disposé au niveau de la calotte (6).

2. Joint à angles selon la revendication 1, **caractérisé en ce que** l'élément de revêtement (8) est réalisé en tant que composant de type coiffe qui loge à peu prés complètement la rotule (2) et qui est en contact, par son côté extérieur (22), sur toute la surface au niveau de la paroi intérieure (34) de la calotte.

3. Joint à angles selon la revendication 1 ou 2, **caractérisé en ce qu'**est prévu, sur la périphérie de l'élément de revêtement (8), un grand nombre d'entailles (18) qui permettent de réaliser des languettes souples (20) agissant en tant que moyen d'enclenchement.

4. Joint à angles selon l'une quelconque des revendications 1 à 3, **caractérisé en ce qu'**au moins une des entailles (18) s'étend en hauteur du côté frontal (17) de l'élément de revêtement (8) jusqu'au ou au-dessus du point central (M) de la rotule (2).

5. Joint à angles selon l'une quelconque des revendications 1 à 4, **caractérisé en ce qu'**il est prévu, au niveau de la paroi intérieure (24) de l'élément de revêtement (8), au moins une saillie (21) s'étendant au moins sur une partie de la périphérie de la rotule (2), avançant vers l'intérieur et en contact, sans jeu, au niveau de la rotule (2), sur la moitié de la rotule orientée vers l'ouverture du logement (12) de l'élément de revêtement (8).

6. Joint à angles selon la revendication 5, **caractérisé en ce que** le logement (15) de la rotule (2) s'élargit à partir de la saillie (21) en direction de l'ouverture du logement (12).

7. Joint à angles selon l'une quelconque des revendications 1 à 6, **caractérisé en ce qu'**il est prévu, au niveau du côté extérieur (22) de l'élément de revêtement (8), une saillie (25) dépassant radialement et au moins partiellement circulaire, et au niveau de la calotte (6), une rainure (33) correspondante qui concourent en formant une liaison par enclenchement.

8. Joint à angles selon l'une quelconque des revendications 1 à 7, **caractérisé en ce que** l'élément de revêtement (8) est disposé, dans la calotte (6), tournant autour de son axe longitudinal (19).

9. Joint à angles selon l'une quelconque des revendications 1 à 8, **caractérisé en ce qu'**un évidement (40) est formé au niveau de la rotule (2) pour prise d'un outil.

10. Joint à angles selon l'une quelconque des revendications 1 à 9, **caractérisé en ce que** la rotule (2) et/ou l'élément de revêtement (8) et/ou la calotte (6) sont en matériau artificiel.

11. Joint à angles selon l'une quelconque des revendications 1 à 10, **caractérisé en ce que** les moyens de liaison solidaires pour bloquer l'élément de revêtement (8) au niveau de la calotte sont exécutés en tant que saillie du moyen d'enclenchement (25), et le moyen de liaison solidaire pour bloquer la rotule (2) dans l'élément de revêtement (8) en tant que saillie (21) et **en ce que** la saillie du moyen d'enclenchement (25) et la saillie (21) sont disposées de telle sorte qu'en appliquant une force de traction sur le moyen de fixation (3), parallèlement à son axe (11), la saillie (21) bloque, de façon sûre, la saillie du moyen d'enclenchement (25) dans un évidement de la calotte (6).

12. Joint à angles selon l'une quelconque des revendications 1 à 11, **caractérisé en ce que** l'élément de revêtement (8) est en contact sur toute la surface au niveau de la paroi intérieure (34) de la calotte.
